(19) **Europäisches Patentamt**
**European Patent Office**
**Office européen des brevets**

(11) **EP 3 209 046 A1**

(12) **EUROPEAN PATENT APPLICATION**
published in accordance with Art. 153(4) EPC

(43) Date of publication:
**23.08.2017 Bulletin 2017/34**

(21) Application number: **15855602.7**

(22) Date of filing: **23.06.2015**

(51) Int Cl.:
***H04W 16/18*** (2009.01)

(86) International application number:
**PCT/CN2015/082065**

(87) International publication number:
**WO 2016/065911 (06.05.2016 Gazette 2016/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.10.2014 CN 201410607988**

(71) Applicant: **Huawei Technologies Co., Ltd.**
**Longgang District**
**Shenzhen, Guangdong 518129 (CN)**

(72) Inventor: **TANG, Zhihua**
**Shenzhen**
**Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **METHOD AND BASE STATION FOR CELL CLUSTERING**

(57) Embodiments of the present invention provide a cell clustering method and a base station. The method includes: obtaining initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located; obtaining an evaluation indicator of interference between the serving cell and the neighboring cell according to the initial information; and clustering the serving cell and the neighboring cell according to the interference evaluation indicator. The cell clustering method and the base station provided in the embodiments of the present invention can enhance performance of a communications system.

Obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located — 101

Obtain an evaluation indicator of interference between the serving cell and the neighboring cell according to the initial information — 102

Cluster the serving cell and the neighboring cell according to the interference evaluation indicator — 103

FIG. 1

EP 3 209 046 A1

## Description

### TECHNICAL FIELD

Embodiments of the present invention relate to the communications technologies, and in particular, to a cell clustering method and a base station.

### BACKGROUND

A cell is one of important network units in a wireless communications network. In a communications network, overall performance of a system usually cannot be enhanced if only a cell is adjusted during network optimization. Therefore, in actual network optimization, several cells whose coverage is contiguous and whose traffic and quality both are related usually need to be aggregated into a proper cell cluster to perform overall analysis and optimization. Therefore, complexity of the entire network can be reduced.

In the prior art, during cell clustering, an available cell is randomly selected as a "cluster master", that is, a cluster center, according to a determined coordinating cluster size by comprehensively considering elements such as a channel state, a priority, and a geographical location change; then, a cell that coordinates with the available cell is found to maximize a coordinating system capacity and reach the predetermined coordinating cluster size, so as to complete the cell clustering. However, in the prior art, a coordinating cluster size needs to be predetermined, and a first cell is randomly selected during cell clustering. Therefore, though fairness of users can be ensured, performance of a communications system in which a cell is located after the clustering is relatively poor.

### SUMMARY

Embodiments of the present invention provide a cell clustering method and a base station, so as to enhance performance of a communications system.

According to a first aspect, an embodiment of the present invention provides a cell clustering method, including:

obtaining initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located;

obtaining an evaluation indicator of interference between the serving cell and the neighboring cell according to the initial information; and

clustering the serving cell and the neighboring cell according to the interference evaluation indicator.

With reference to the first aspect, in a first possible implementation manner of the first aspect, the obtaining an evaluation indicator of interference between the serving cell and the neighboring cell according to the initial information includes:

obtaining a first handover quantity of handovers from the neighboring cell to the serving cell when the initial information is used to indicate the information about a handover between the serving cell and the neighboring cell; and

if the first handover quantity is greater than a first preset threshold, obtaining the evaluation indicator of interference between the serving cell and the neighboring cell according to a preset first increasing function and the first handover quantity.

With reference to the first aspect, in a second possible implementation manner of the first aspect, the obtaining an evaluation indicator of interference between the serving cell and the neighboring cell according to the initial information includes:

obtaining a second handover quantity of handovers from the serving cell to the neighboring cell; and

obtaining a second handover quantity of handovers from the serving cell to the neighboring cell when the initial information is used to indicate the information about a handover between the serving cell and the neighboring cell; and if the second handover quantity is greater than a second preset threshold, obtaining the evaluation indicator of interference between the serving cell and the neighboring cell according to a preset second increasing function and the second handover quantity.

With reference to the first aspect, in a third possible implementation manner of the first aspect, the obtaining an evaluation indicator of interference between the serving cell and the neighboring cell according to the initial information includes:

when the initial information is used to indicate the information about interference between the serving cell and the neighboring cell, obtaining the evaluation indicator of interference between the serving cell and the neighboring cell according to uplink reference signal received power RSRP of signals sent by multiple UEs in the serving cell to the neighboring cell, where the multiple UEs include the first UE; and

obtaining uplink RSRP of a signal sent by the first UE in the serving cell to the neighboring cell includes:

obtaining a first signal difference according to downlink RSRP reported by the first UE, where the first signal difference is a signal difference between downlink RSRP of the serving cell and downlink RSRP of the neighboring cell, and the downlink RSRP reported by the first UE includes downlink RSRP of a signal sent by the serving cell to the first UE and downlink RSRP of a signal sent by the neighboring cell to the first UE; and

obtaining, according to the first signal difference and uplink RSRP of a signal sent by the first UE to the serving cell, the uplink RSRP of the signal sent by the first UE to the neighboring cell.

With reference to the first aspect, in a fourth possible implementation manner of the first aspect, the obtaining an evaluation indicator of interference between the serving cell and the neighboring cell according to the initial information includes:

when the initial information is used to indicate the information about interference between the serving cell and the neighboring cell, obtaining the evaluation indicator of interference between the serving cell and the neighboring cell according to uplink reference signal received power RSRP of signals sent by multiple UEs in the neighboring cell to the serving cell, where the multiple UEs include second UE; and

obtaining uplink RSRP of a signal sent by the second UE in the neighboring cell to the serving cell includes:

obtaining a second signal difference according to downlink RSRP reported by the second UE, where the second signal difference is a signal difference between downlink RSRP of the neighboring cell and downlink RSRP of the serving cell, and the downlink RSRP reported by the second UE includes downlink RSRP of a signal sent by the neighboring cell to the second UE and downlink RSRP of a signal sent by the serving cell to the second UE; and

obtaining, according to the second signal difference and uplink RSRP of a signal sent by the second UE to the neighboring cell, the uplink RSRP of the signal sent by the second UE to the serving cell.

With reference to any one of the first aspect or the first to the fourth possible implementation manners of the first aspect, in a fifth possible implementation manner of the first aspect, the clustering the serving cell and the neighboring cell according to the interference evaluation indicator includes:

grouping a neighboring cell whose interference evaluation indicator is greater than a third preset threshold and the serving cell into a same cluster.

With reference to any one of the first aspect or the first to the fifth possible implementation manners of the first aspect, in a sixth possible implementation manner of the first aspect, before the clustering the serving cell and the neighboring cell according to the interference evaluation indicator, the method further includes:

when a delay between the first UE and the neighboring cell is less than a fourth preset threshold, executing the operation of clustering the serving cell and the neighboring cell according to the interference evaluation indicator.

According to a second aspect, an embodiment of the present invention provides a base station, including:

a first obtaining module, configured to obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located;

a second obtaining module, configured to obtain an evaluation indicator of interference between the serving cell and the neighboring cell according to the initial information; and

a clustering module, configured to cluster the serving cell and the neighboring cell according to the interference evaluation indicator.

With reference to the second aspect, in a first possible implementation manner of the second aspect, the second obtaining module includes:

a first handover quantity obtaining submodule, configured to obtain a first handover quantity of handovers from the neighboring cell to the serving cell when the initial information is used to indicate the information about a handover between the serving cell and the neighboring cell; and
a first processing submodule, configured to: if the first handover quantity is greater than a first preset threshold, obtain the evaluation indicator of interference between the serving cell and the neighboring cell according to a preset first increasing function and the first handover quantity.

With reference to the second aspect, in a second possible implementation manner of the second aspect, the second obtaining module includes:

a second handover quantity obtaining submodule, configured to obtain a second handover quantity of handovers from the serving cell to the neighboring cell when the initial information is used to indicate the information about a handover between the serving cell and the neighboring cell; and
a second processing submodule, configured to: if the second handover quantity is greater than a second preset threshold, obtain the evaluation indicator of interference between the serving cell and the neighboring cell according to a preset second increasing function and the second handover quantity.

With reference to the second aspect, in a third possible implementation manner of the second aspect, the second obtaining module includes:

a third processing submodule, configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the serving cell to the neighboring cell, where the multiple UEs include the first UE; where the third processing submodule is specifically configured to:

obtain a first signal difference according to downlink RSRP reported by the first UE, where the first signal difference is a signal difference between downlink RSRP of the serving cell and downlink RSRP of the neighboring cell, and the downlink RSRP reported by the first UE includes downlink RSRP of a signal sent by the serving cell to the first UE and downlink RSRP of a signal sent by the neighboring cell to the first UE; and
obtain, according to the first signal difference and uplink RSRP of a signal sent by the first UE to the serving cell, uplink RSRP of a signal sent by the first UE to the neighboring cell.

With reference to the second aspect, in a fourth possible implementation manner of the second aspect, the second obtaining module includes:

a fourth processing submodule, configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the neighboring cell to the serving cell, where the multiple UEs include second UE; where the fourth processing sub module is specifically configured to:

obtain a second signal difference according to downlink RSRP reported by the second UE, where the second signal difference is a signal difference between downlink RSRP of the neighboring cell and downlink RSRP of the serving cell, and the downlink RSRP reported by the second UE includes downlink RSRP of a signal sent by the neighboring cell to the second UE and downlink RSRP of a signal sent by the serving cell to the second UE; and
obtain, according to the second signal difference and uplink RSRP of a signal sent by the second UE to the neighboring cell, uplink RSRP of a signal sent by the second UE to the serving cell.

With reference to any one of the second aspect or the first to the fourth possible implementation manners of the second aspect, in a fifth possible implementation manner of the second aspect, the clustering module is specifically configured to:

group a neighboring cell whose interference evaluation indicator is greater than a third preset threshold and the serving cell into a same cluster.

With reference to any one of the second aspect or the first to fifth possible implementation manners of the second aspect, in a sixth possible implementation manner of the second aspect, the base station further includes:

a delay determining module, configured to: when a delay between the first UE and the neighboring cell is less than a fourth preset threshold, execute the operation of clustering the serving cell and the neighboring cell according to the interference evaluation indicator.

According to the cell clustering method and the base station provided in the embodiments of the present invention, an evaluation indicator of interference between a serving cell and a neighboring cell is obtained by using obtained initial information, and the serving cell and the neighboring cell are clustered according to the interference evaluation indicator. The initial information is used to indicate information about a handover between the serving cell and the neighboring cell or information about interference between the serving cell and the neighboring cell. The neighboring cell is a cell adjacent to the serving cell, and the serving cell is a cell in which first user equipment UE is located. Because the evaluation indicator of interference between the cells is obtained according to initial information of the neighboring cell, and then the cells are dynamically grouped into a coordinating cluster, performance of a communications system is enhanced.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic flowchart of a cell clustering method according to an embodiment of the present invention;
FIG. 2 is a schematic flowchart of a cell clustering method according to another embodiment of the present invention;
FIG. 3 is a schematic structural diagram of multiple-cell coordination in a communications system;
FIG. 4 is a schematic structural diagram of a base station according to an embodiment of the present invention;
FIG. 5 is a schematic structural diagram of a base station according to another embodiment of the present invention; and
FIG. 6 is a schematic structural diagram of a base station according to still another embodiment of the present invention.

**DESCRIPTION OF EMBODIMENTS**

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

A method provided in the embodiments of the present invention may be applied to wireless networks of different standards, for example, a global system for mobile communications (Global System for Mobile communication, GSM for short), a Code Division Multiple Access (Code Division Multiple Access, CDMA for short) system, a CDMA2000 system, a Wideband Code Division Multiple Access (Wideband Code Division Multiple Access, WCDMA for short) system, a Time Division-Synchronous Code Division Multiple Access (Time Division-Synchronous Code Division Multiple Access, TD-SCDMA for short) system, and a Long Term Evolution (Long Term Evolution, LTE) system or a subsequent evolution system of LTE, and the like. A radio access network may include different network elements in different systems. For example, a network element in a radio access network in LTE and the subsequent evolution system of LTE includes an evolved NodeB (evolved NodeB, eNodeB), and this is not limited in the embodiments of the present invention.

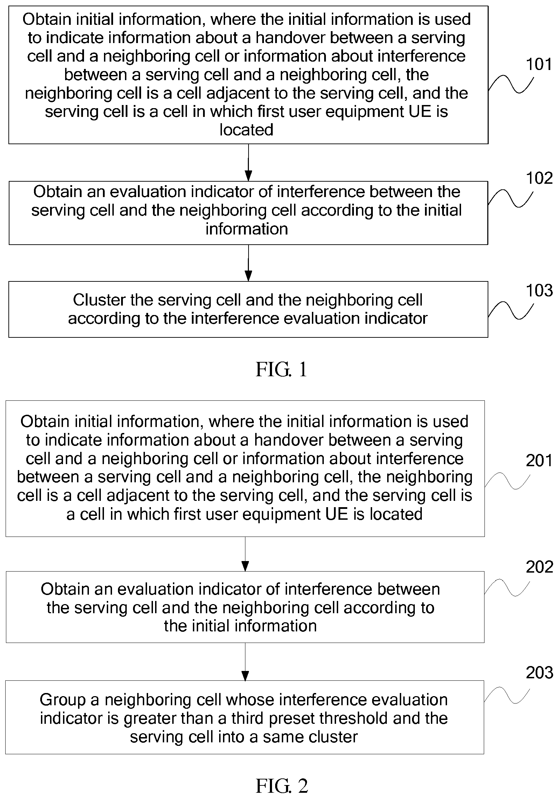

FIG. 1 is a schematic flowchart of a cell clustering method according to an embodiment of the present invention. As shown in FIG. 1, the method in this embodiment may include the following steps.

Step 101: Obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located.

In this embodiment, the initial information includes information about intra-frequency handover between the serving cell and the neighboring cell, the information about interference between the serving cell and the neighboring cell, information about a delay between the serving cell and the neighboring cell, or the like. There may be one or more neighboring cells, and a quantity of neighboring cells is not specially limited in the present invention.

Step 102: Obtain an evaluation indicator of interference between the serving cell and the neighboring cell according to the initial information.

In this embodiment, for any neighboring cell, after obtaining initial information of the neighboring cell, a base station to which the serving cell belongs may obtain, by means of calculation according to the initial information, an evaluation indicator of interference caused by the serving cell to the neighboring cell or an evaluation indicator of interference caused by the neighboring cell to the serving cell.

Step 103: Cluster the serving cell and the neighboring cell according to the interference evaluation indicator.

In this embodiment, whether the evaluation indicator of interference caused by the serving cell to the neighboring cell or the evaluation indicator of interference caused by the neighboring cell to the serving cell is used to cluster the serving cell and the neighboring cell may be determined according to a type of a coordinating algorithm. In a specific implementation process, if output of the coordinating algorithm affects only the serving cell instead of the neighboring cell, the base station to which the serving cell belongs clusters the serving cell and the neighboring cell according to an evaluation indicator of interference caused by the neighboring cell to the serving cell; or if output of the coordinating algorithm affects both the serving cell and the neighboring cell, the base station to which the serving cell belongs clusters the serving cell and the neighboring cell according to an evaluation indicator of interference caused by the serving cell to the neighboring cell. The coordinating algorithm may be a coordinating interference prediction adaptive modulation and coding (Adaptive Modulation and Coding, AMC for short) algorithm, a multi-cell interference cancellation algorithm, a coordinated scheduling-based power control algorithm, or the like. In a specific implementation process, different coordinating algorithms may be selected according to different application. A specific type of the coordinating algorithm is not specially limited herein in the present invention.

In addition, the cell clustering method in this embodiment may be executed at intervals of a preset time. If the evaluation indicator of interference between the serving cell and the neighboring cell changes, a cell clustering manner changes accordingly. That is, a coordinating cluster obtained after cells are clustered is not fixed but dynamically updated according to information about interference between the cells. Therefore, performance of a communications system can be enhanced.

According to the cell clustering method provided in this embodiment of the present invention, an evaluation indicator of interference between a serving cell and a neighboring cell is obtained by using obtained initial information, and the serving cell and the neighboring cell are clustered according to the interference evaluation indicator. The initial information is used to indicate information about a handover between the serving cell and the neighboring cell or information about interference between the serving cell and the neighboring cell. The neighboring cell is a cell adjacent to the serving cell, and the serving cell is a cell in which first user equipment UE is located. Because the evaluation indicator of interference between the cells is obtained according to initial information of the neighboring cell, and then the cells are dynamically grouped into a coordinating cluster, performance of a communications system is enhanced.

On the basis of the foregoing cell clustering method embodiment, there may be the following manners of obtaining the evaluation indicator of interference between the serving cell and the neighboring cell according to the initial information. In an actual application process, calculation may be performed according to specific application by using any one of the following manners.

Manner 1: When the initial information is used to indicate the information about a handover between the serving cell and the neighboring cell, the evaluation indicator of interference caused by the serving cell to the neighboring cell is obtained according to a first handover quantity of handovers from the neighboring cell to the serving cell.

Specifically, whether the neighboring cell and the serving cell are adjacent to each other may be learned by obtaining a quantity of handovers between the two cells. Persons skilled in the art may understand that, if the first handover quantity of handovers from the neighboring cell to the serving cell is greater than a first preset threshold, it may indirectly indicate that the neighboring cell and the serving cell are physically adjacent to each other, and interference of specific intensity exists between the two cells. In a specific implementation process, the first preset threshold may be selected according to actual application or experience. Selection of a specific value of the first preset threshold is not specially limited herein in this embodiment.

The first handover quantity of handovers from the neighboring cell to the serving cell is obtained to determine whether the first handover quantity is greater than the first preset threshold. If it is learned that the first handover quantity is greater than the first preset threshold, the evaluation indicator of interference between the serving cell and the neighboring cell, which is specifically the evaluation indicator of interference caused by the serving cell to the neighboring cell, is obtained according to a preset first increasing function and the first handover quantity. In a specific implementation process, the first handover quantity may be mapped, according to a formula (1.1) by using the first increasing function, into the evaluation indicator of interference caused by the serving cell to the neighboring cell. The first increasing function may be any increasing function, for example, may be a linear increasing function or an exponential increasing function, and a type of the first increasing function is not limited in the present invention:

$$A_{ij} = function(N_{ji}) \quad (1.1),$$

where

$i$ is the serving cell, $j$ is the neighboring cell, $A_{ij}$ is the evaluation indicator of interference caused by the serving cell to the neighboring cell, and $N_{ji}$ is the first handover quantity.

Manner 2: When the initial information is used to indicate the information about a handover between the serving cell and the neighboring cell, the evaluation indicator of interference caused by the neighboring cell to the serving cell is obtained according to a second handover quantity of handovers from the serving cell to the neighboring cell.

Specifically, whether the neighboring cell and the serving cell are adjacent to each other may be learned by obtaining a quantity of handovers between the two cells. Persons skilled in the art may understand that, if the second handover quantity of handovers from the serving cell to the neighboring cell is greater than a second preset threshold, it indirectly indicates that the serving cell and the neighboring cell are physically adjacent to each other, and interference of specific intensity exists between the two cells. In a specific implementation process, the second preset threshold may be selected according to actual application or experience. Selection of a specific value of the second preset threshold is not specially limited herein in this embodiment.

The second handover quantity of handovers from the serving cell to the neighboring cell is obtained to determine whether the second handover quantity is greater than the second preset threshold. If it is learned that the second handover quantity is greater than the second preset threshold, the evaluation indicator of interference between the serving cell and the neighboring cell, which is specifically the evaluation indicator of interference caused by the neighboring cell to the serving cell, is obtained according to a preset second increasing function and the second handover quantity. In a specific implementation process, the second handover quantity may be mapped, according to a formula (1.2) by using the second increasing function, into the evaluation indicator of interference caused by the neighboring cell to the serving cell. The second increasing function may be any increasing function, for example, may be a linear increasing function or an exponential increasing function, and a type of the second increasing function is not limited in the present invention:

$$A_{ji} = function(N_{ij}) \quad (1.2),$$

where

$i$ is the serving cell, $j$ is the neighboring cell, $A_{ji}$ is the evaluation indicator of interference caused by the neighboring cell to the serving cell, and $N_{ij}$ is the second handover quantity.

In addition, the second increasing function may be the same as or different from the first increasing function.

Manner 3: When the initial information is used to indicate the information about interference between the serving cell and the neighboring cell, the evaluation indicator of interference caused by the serving cell to the neighboring cell is obtained according to uplink reference signal received power (Reference Signal Receiving Power, RSRP for short) of signals sent by multiple user equipments (User Equipment, UE for short) in the serving cell to the neighboring cell.

Specifically, the evaluation indicator of interference between the serving cell and the neighboring cell, which is specifically the evaluation indicator of interference caused by the serving cell to the neighboring cell, may be obtained in a manner of averaging uplink RSRP of the signals sent by the multiple UEs in the serving cell to the neighboring cell. Preferably, uplink RSRP of signals sent by all UEs in the serving cell to the neighboring cell may be averaged. In a specific implementation process, the evaluation indicator of interference between the serving cell and the neighboring cell may be calculated according to a formula (1.3):

$$A_{ij} = E_{k_1 \in U(i)}\{RSRP\_UL_{ij}(k_1)\} \quad (1.3),$$

where

$i$ is the serving cell, $j$ is the neighboring cell, $i$ is the evaluation indicator of interference caused by the serving cell to the neighboring cell, $U(i)$ is a set of all the UEs in the serving cell, $k_1$ is first UE located in the serving cell, and $RSRP\_UL_{ij}(k_1)$ is uplink RSRP of a signal sent by the first UE to the neighboring cell.

The following describes in detail a manner of calculating the uplink RSRP of the signal sent by the first UE in the serving cell to the neighboring cell.

A first signal difference is first obtained according to downlink RSRP reported by the first UE. The first signal difference is a signal difference between downlink RSRP of the serving cell and downlink RSRP of the neighboring cell. The downlink RSRP reported by the first UE includes downlink RSRP of a signal sent by the serving cell to the first UE and downlink RSRP of a signal sent by the neighboring cell to the first UE. After obtaining the downlink RSRP reported by the first UE, the base station to which the serving cell belongs may obtain, by means of calculation according to a formula (1.4), the signal difference between the downlink RSRP of the serving cell and the downlink RSRP of the neighboring cell:

$$\Delta RSRP\_DL_{ij}(k_1) = RSRP\_DL_j(k_1) - RSRP\_DL_i(k_1) \quad (1.4),$$

where
$\Delta RSRP\_DL_{ij}(k_1)$ is the signal difference between the downlink RSRP of the serving cell and the downlink RSRP of the neighboring cell, $RSRP\_DL_j(k_1)$ is the downlink RSRP of the signal sent by the neighboring cell to the first UE, and $RSRP\_DL_i(k_1)$ is the downlink RSRP of the signal sent by the serving cell to the first UE.

After obtaining the first signal difference, the base station to which the serving cell belongs obtains, according to the first signal difference and uplink RSRP of a signal sent by the first UE to the serving cell, the uplink RSRP of the signal sent by the first UE to the neighboring cell. In a specific implementation process, the uplink RSRP of the signal sent by the first UE to the neighboring cell may be calculated according to a formula (1.5):

$$RSRP\_UL_{ij}(k_1) = RSRP\_UL_i(k_1) + \Delta RSRP\_DL_{ij}(k_1) \quad (1.5),$$

where
$RSRP\_UL_{ij}(k_1)$ is the uplink RSRP of the signal sent by the first UE to the neighboring cell, and $RSRP\_UL_i(k_1)$ is the uplink RSRP of the signal sent by the first UE to the serving cell.

It should be noted that a manner of obtaining uplink RSRP of a signal sent by other UE in the serving cell to the neighboring cell is similar to the manner of obtaining the uplink RSRP of the signal sent by the first UE to the neighboring cell, and details are not described herein again.

Manner 4: When the initial information is used to indicate the information about interference between the serving cell and the neighboring cell, the evaluation indicator of interference caused by the neighboring cell to the serving cell is obtained according to uplink RSRP of signals sent by multiple UEs in the neighboring cell to the serving cell.

Specifically, the evaluation indicator of interference between the serving cell and the neighboring cell, which is specifically the evaluation indicator of interference caused by the neighboring cell to the serving cell, may be obtained in a manner of averaging uplink RSRP of the signals sent by the multiple UEs in the neighboring cell to the serving cell. Preferably, uplink RSRP of signals sent by all UEs in the neighboring cell to the serving cell may be averaged. In a specific implementation process, the evaluation indicator of interference between the serving cell and the neighboring cell may be calculated according to a formula (1.6):

$$A_{ji} = E_{k_2 \in U(j)}\{RSRP\_UL_{ji}(k_2)\} \quad (1.6),$$

where
$i$ is the serving cell, $j$ is the neighboring cell, $A_{ji}$ is the evaluation indicator of interference caused by the neighboring cell to the serving cell, $U(j)$ is a set of all the UEs in the neighboring cell, $k_2$ is second UE located in the neighboring cell, and $RSRP\_UL_{ji}(k_2)$ is uplink RSRP of a signal sent by the second UE to the serving cell.

The following describes in detail a manner of calculating the uplink RSRP of the signal sent by the second UE in the neighboring cell to the serving cell.

A second signal difference is first obtained according to downlink RSRP reported by the second UE. The second signal difference is a signal difference between downlink RSRP of the neighboring cell and downlink RSRP of the serving cell. The downlink RSRP reported by the second UE includes downlink RSRP of a signal sent by the neighboring cell to the second UE and downlink RSRP of a signal sent by the serving cell to the second UE. After obtaining the downlink RSRP reported by the second UE, the base station to which the serving cell belongs may obtain, by means of calculation according to a formula (1.7), the signal difference between the downlink RSRP of the neighboring cell and the downlink RSRP of the serving cell:

$$\Delta RSRP\_DL_{ji}(k_2) = RSRP\_DL_i(k_2) - RSRP\_DL_j(k_2) \quad (1.7),$$

where

$\Delta RSRP\_DL_{ji}(k_2)$ is the signal difference between the downlink RSRP of the neighboring cell and the downlink RSRP of the serving cell, $RSRP\_DL_i(k_2)$ is the downlink RSRP of the signal sent by the serving cell to the second UE, and $RSRP\_DL_j(k_2)$ is the downlink RSRP of the signal sent by the serving cell to the second UE.

After obtaining the second signal difference, the base station to which the serving cell belongs obtains, according to the second signal difference and uplink RSRP of a signal sent by the second UE to the neighboring cell, the uplink RSRP of the signal sent by the second UE to the serving cell. In a specific implementation process, the uplink RSRP of the signal sent by the second UE to the serving cell may be calculated according to a formula (1.8):

$$RSRP\_UL_{ji}(k_2) = RSRP\_UL_j(k_2) + \Delta RSRP\_DL_{ji}(k_2) \quad (1.8),$$

where

$RSRP\_UL_{ji}(k_2)$ is the uplink RSRP of the signal sent by the second UE to the serving cell, and $RSRP\_UL_j(k_2)$ is the uplink RSRP of the signal sent by the second UE to the neighboring cell.

In addition, it should be noted that a manner of obtaining uplink RSRP of a signal sent by other UE in the neighboring cell to the serving cell is similar to the manner of obtaining the uplink RSRP of the signal sent by the second UE to the serving cell, and details are not described herein again.

It should be noted that, for the third and the fourth manners of obtaining the interference evaluation indicator, if the uplink RSRP of the signals sent by the multiple UEs in the serving cell to the neighboring cell or the uplink RSRP of the signals sent by the multiple UEs in the neighboring cell to the serving cell can be directly obtained by means of measurement, the evaluation indicator of interference between the serving cell and the neighboring cell can be directly obtained by means of calculation according to the formula (1.3) or (1.6) by using the measured value.

According to the cell clustering method provided in this embodiment of the present invention, an evaluation indicator of interference between a serving cell and a neighboring cell is obtained by means of calculation by using different obtained initial information. Therefore, calculation of the interference evaluation indicator is simplified and accuracy of the calculation is improved.

FIG. 2 is a schematic flowchart of a cell clustering method according to another embodiment of the present invention. This embodiment of the present invention provides a cell clustering method. As shown in FIG. 2, the method in this embodiment may include the following steps.

Step 201: Obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located.

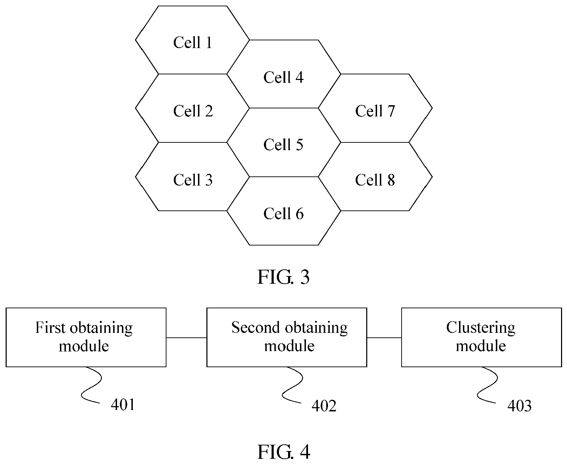

FIG. 3 is a schematic structural diagram of multiple-cell coordination in a communications system. As shown in FIG. 3, multiple cells may exist in the communications system. If the first UE is located in a cell 2, the cell 2 serves as a serving cell, and all cells adjacent to the cell 2 are neighboring cells. A base station to which the cell 2 belongs may obtain information about intra-frequency handover between the cell 2 and the neighboring cells, information about interference between the cell 2 and the neighboring cells, information about a delay between the cell 2 and the neighboring cells, or the like.

Step 202: Obtain an evaluation indicator of interference between the serving cell and the neighboring cell according to the initial information.

Specifically, after obtaining the initial information, the base station to which the serving cell belongs may obtain, according to the initial information, an evaluation indicator of interference caused by the serving cell to the neighboring cell or an evaluation indicator of interference caused by the neighboring cell to the serving cell. For example, after initial information of both the cell 2 and a cell 1 adjacent to the cell 2 is obtained, an evaluation indicator of interference caused by the cell 2 to the cell 1 or an evaluation indicator of interference caused by the cell 1 to the cell 2 may be learned. In addition, a manner of obtaining an evaluation indicator of interference caused by the cell 2 to another neighboring cell and that of obtaining an evaluation indicator of interference caused by another neighboring cell to the cell 2 are similar to the manner described above, and details are not described herein again.

Step 203: Group a neighboring cell whose interference evaluation indicator is greater than a third preset threshold and the serving cell into a same cluster.

In this embodiment, if it is determined, according to a type and output of a coordinating algorithm such as a coordinated scheduling-based power control algorithm, that the coordinating algorithm affects both the serving cell and the neighboring cell, the base station to which the serving cell belongs identifies all neighboring cells that are interfered by the serving cell, and groups these neighboring cells and the serving cell into a same cell cluster. In a specific implementation process, the first manner or the third manner in the manners of obtaining the evaluation indicator of interference between the serving cell and the neighboring cell may be used to calculate evaluation indicators of interference caused by the serving cell to all the neighboring cells, and a neighboring cell corresponding to an interference evaluation indicator that is greater than the third preset threshold and the serving cell are grouped into a same cluster. For example, if the cell 2 serves as the serving cell, an evaluation indicator of interference caused by the cell 2 to the cell 1, an evaluation indicator of interference caused by the cell 2 to a cell 4, an evaluation indicator of interference caused by the cell 2 to a cell 5, and an evaluation indicator of interference caused by the cell 2 to a cell 3 are obtained by means of calculation. If the evaluation indicator of interference caused by the cell 2 to the cell 1 and the evaluation indicator of interference caused by the cell 2 to the cell 4 are greater than the third preset threshold, the cell 2, the cell 1, and the cell 4 are grouped into a same cluster.

In addition, when the output of the coordinating algorithm affects both the serving cell and the neighboring cell, after a coordinating cluster is obtained by clustering a cell, information related to a neighboring cell in the coordinating cluster needs to be used during network optimization. Overall performance of a communications system is enhanced by performing network optimization in the coordinating cluster.

Further, if it is determined, according to a type and output of a coordinating algorithm such as a coordinating interference prediction AMC algorithm or a multi-cell interference cancellation algorithm, that the coordinating algorithm affects only the serving cell instead of the neighboring cell, the base station to which the serving cell belongs identifies all neighboring cells that interfere the serving cell, and groups these neighboring cells and the serving cell into a same cell cluster. In a specific implementation process, the second manner or the fourth manner in the manners of obtaining the evaluation indicator of interference between the serving cell and the neighboring cell may be used to calculate evaluation indicators of interference caused by all the neighboring cells to the serving cell, and a neighboring cell corresponding to an interference evaluation indicator that is greater than the third preset threshold and the serving cell are grouped into a same cluster. For example, if the cell 2 serves as the serving cell, an evaluation indicator of interference caused by the cell 1 to the cell 2, an evaluation indicator of interference caused by a cell 4 to the cell 2, an evaluation indicator of interference caused by a cell 5 to the cell 2, and an evaluation indicator of interference caused by a cell 3 to the cell 2 are calculated. If the evaluation indicator of interference caused by the cell 1 to the cell 2 and the evaluation indicator of interference caused by the cell 4 to the cell 2 are greater than the third preset threshold, the cell 1, the cell 4, and the cell 2 are grouped into a same cluster.

The third preset threshold may be selected according to an actual requirement, and a proper value may be selected according to experience in a specific implementation process. Selection of a specific value of the third preset threshold is not specially limited herein in this embodiment.

In addition, when the output of the coordinating algorithm affects only the serving cell instead of the neighboring cell, after a coordinating cluster is obtained by clustering a cell, information related to a neighboring cell in the coordinating cluster needs to be used during network optimization. Overall performance of a communications system can be enhanced by performing optimization in the serving cell.

According to the cell clustering method provided in this embodiment of the present invention, an evaluation indicator of interference between a serving cell and a neighboring cell is obtained by using obtained initial information, and the serving cell and the neighboring cell are clustered according to the interference evaluation indicator. The initial information is used to indicate information about a handover between the serving cell and the neighboring cell or information about interference between the serving cell and the neighboring cell. The neighboring cell is a cell adjacent to the serving cell, and the serving cell is a cell in which first UE is located. Because the evaluation indicator of interference between the cells is obtained according to initial information of the neighboring cell, and then the cells are dynamically grouped into a coordinating cluster, performance of a communications system is enhanced. In addition, whether the interference evaluation indicator is greater than a third preset threshold is determined, and clustering is performed according to a result of the determining. Therefore, accuracy of the clustering is improved.

Further, in the method embodiment described in the foregoing, if the coordinating algorithm has a requirement on a delay of information exchange, for example, in an Internet Protocol radio access network (Internet Protocol Radio Access Network, IP RAN for short), before cell clustering is performed, it is required to first determine whether a delay between the first UE and the neighboring cell is less than a fourth preset threshold. If it is determined that the delay is less than the fourth preset threshold, that is, the delay requirement of the coordinating algorithm on information exchange is met, the serving cell and the neighboring cell are clustered according to the interference evaluation indicator to obtain a coordinating cluster; or if the delay between the first UE and the neighboring cell does not meet the delay requirement of the coordinating algorithm on information exchange, the neighboring cell is not considered during clustering.

It should be noted that the operation of determining that the delay between the first UE and the neighboring cell is less than the fourth preset threshold may also be performed before obtaining the evaluation indicator of interference between the serving cell and the neighboring cell.

In addition, in the prior art, during cell clustering, generally, an available cell is randomly selected as a "cluster master" to perform clustering, which causes relatively poor performance of a communications system. However, in this embodiment, each cell plays a role of the "cluster master". Therefore, fairness of users can be ensured while performance of the communications system can be enhanced.

Further, coordinating clusters that are of all cells and obtained by clustering the cells by using the clustering manner in the foregoing embodiment may or may not overlap each other. In addition, persons skilled in the art may understand that a coordinating cluster obtained in this manner is of a cell level. Therefore, a capacity of a coordinating system does not need to be considered, so that complexity of a clustering algorithm can be reduced.

Further, in the method embodiment described in the foregoing, after cell clustering is completed and a coordinating cluster is obtained, if in an IP RAN networking mode, the base station to which the serving cell belongs sends, by using an X2 interface, clustering information to a cell, in the coordinating cluster, of another base station except the base station to which the serving cell belongs. If in a cloud baseband (Cloud Base Band, Cloud BB for short) processing unit mode, all cells in the coordinating cluster are notified of the clustering information by using a backhaul line or in a manner of memory sharing, so as to perform overall network optimization.

FIG. 4 is a schematic structural diagram of a base station according to an embodiment of the present invention. As shown in FIG. 4, the base station provided in this embodiment of the present invention includes a first obtaining module 401, a second obtaining module 402, and a clustering module 403.

The first obtaining module 401 is configured to obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located. The second obtaining module 402 is configured to obtain an evaluation indicator of interference between the serving cell and the neighboring cell according to the initial information. The clustering module 403 is configured to cluster the serving cell and the neighboring cell according to the interference evaluation indicator.

The base station for cell clustering in this embodiment may be configured to perform the technical solution in the cell clustering method embodiment shown in FIG. 1, and implementation principles thereof are similar and are not described herein again.

According to the base station provided in this embodiment of the present invention, an evaluation indicator of interference between a serving cell and a neighboring cell is obtained by using obtained initial information, and the serving cell and the neighboring cell are clustered according to the interference evaluation indicator. The initial information is used to indicate information about a handover between the serving cell and the neighboring cell or information about interference between the serving cell and the neighboring cell. The neighboring cell is a cell adjacent to the serving cell, and the serving cell is a cell in which first user equipment UE is located. Because the evaluation indicator of interference between the cells is obtained according to initial information of the neighboring cell, and then the cells are dynamically grouped into a coordinating cluster, performance of a communications system is enhanced.

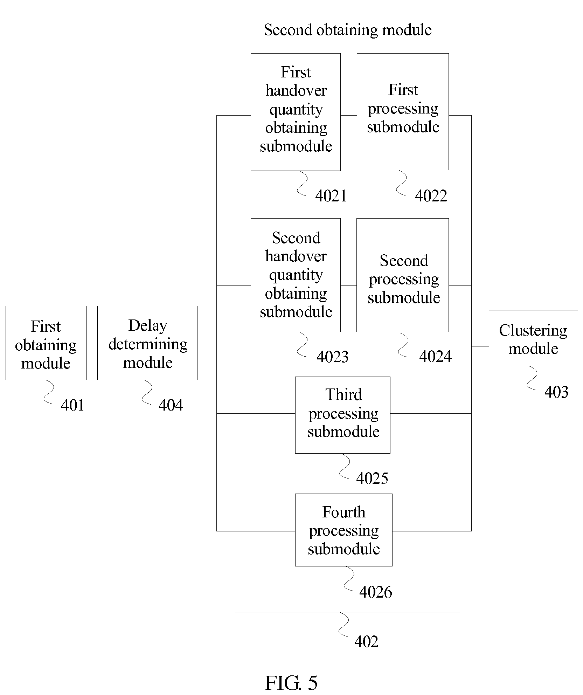

FIG. 5 is a schematic structural diagram of a base station according to another embodiment of the present invention. As shown in FIG. 5, this embodiment is based on the embodiment shown in FIG. 4. The second obtaining module 402 includes a first handover quantity obtaining submodule 4021 and a first processing submodule 4022.

The first handover quantity obtaining submodule 4021 is configured to obtain a first handover quantity of handovers from the neighboring cell to the serving cell when the initial information is used to indicate the information about a handover between the serving cell and the neighboring cell. The first processing submodule 4022 is configured to: if the first handover quantity is greater than a first preset threshold, obtain the evaluation indicator of interference between the serving cell and the neighboring cell according to a preset first increasing function and the first handover quantity.

Optionally, the second obtaining module 402 includes a second handover quantity obtaining submodule 4023 and a second processing submodule 4024.

The second handover quantity obtaining submodule 4023 is configured to obtain a second handover quantity of handovers from the serving cell to the neighboring cell when the initial information is used to indicate the information about a handover between the serving cell and the neighboring cell. The second processing submodule 4024 is configured to: if the second handover quantity is greater than a second preset threshold, obtain the evaluation indicator of interference between the serving cell and the neighboring cell according to a preset second increasing function and the second handover quantity.

Optionally, the second obtaining module 402 includes a third processing submodule 4025.

The third processing submodule 4025 is configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the serving cell to the neighboring cell, where the multiple UEs include the first UE.

The third processing submodule 4025 is specifically configured to:

obtain a first signal difference according to downlink RSRP reported by the first UE, where the first signal difference is a signal difference between downlink RSRP of the serving cell and downlink RSRP of the neighboring cell, and the downlink RSRP reported by the first UE includes downlink RSRP of a signal sent by the serving cell to the first UE and downlink RSRP of a signal sent by the neighboring cell to the first UE; and

obtain, according to the first signal difference and uplink RSRP of a signal sent by the first UE to the serving cell, uplink RSRP of a signal sent by the first UE to the neighboring cell.

Optionally, the second obtaining module 402 includes a fourth processing submodule 4026.

The fourth processing submodule 4026 is configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the neighboring cell to the serving cell, where the multiple UEs include second UE.

The fourth processing submodule 4026 is specifically configured to:

obtain a second signal difference according to downlink RSRP reported by the second UE, where the second signal difference is a signal difference between downlink RSRP of the neighboring cell and downlink RSRP of the serving cell, and the downlink RSRP reported by the second UE includes downlink RSRP of a signal sent by the neighboring cell to the second UE and downlink RSRP of a signal sent by the serving cell to the second UE; and

obtain, according to the second signal difference and uplink RSRP of a signal sent by the second UE to the neighboring cell, uplink RSRP of a signal sent by the second UE to the serving cell.

Optionally, the clustering module 403 is specifically configured to group a neighboring cell whose interference evaluation indicator is greater than a third preset threshold and the serving cell into a same cluster.

Optionally, the base station further includes a delay determining module 404. The delay determining module 404 is configured to: when a delay between the first UE and the neighboring cell is less than a fourth preset threshold, execute the operation of clustering the serving cell and the neighboring cell according to the interference evaluation indicator.

The base station in this embodiment may be configured to perform the technical solution of the cell clustering method provided in any embodiment of the present invention, and implementation principles and technical effects thereof are similar and are not described herein again.

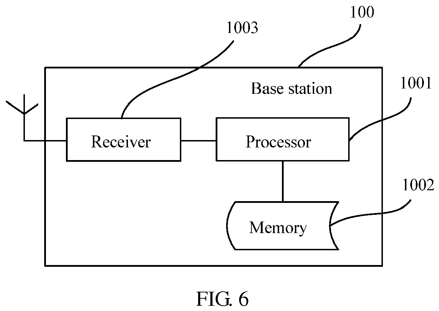

FIG. 6 is a schematic structural diagram of a base station according to still another embodiment of the present invention. As shown in FIG. 6, a base station 100 provided in this embodiment includes a processor 1001, a memory 1002, and a receiver 1003, and the receiver 1003 may be connected to the processor 1001. The memory 1002 stores an execution instruction. When the base station 100 runs, the processor 1001 communicates with the memory 1002, and the processor 1001 invokes the execution instruction in the memory 1002 to perform the following operations:

obtaining initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located;

obtaining an evaluation indicator of interference between the serving cell and the neighboring cell according to the initial information; and

clustering the serving cell and the neighboring cell according to the interference evaluation indicator.

Optionally, the obtaining an evaluation indicator of interference between the serving cell and the neighboring cell according to the initial information includes:

obtaining a first handover quantity of handovers from the neighboring cell to the serving cell when the initial information is used to indicate the information about a handover between the serving cell and the neighboring cell; and

if the first handover quantity is greater than a first preset threshold, obtaining the evaluation indicator of interference between the serving cell and the neighboring cell according to a preset first increasing function and the first handover quantity.

Optionally, the obtaining an evaluation indicator of interference between the serving cell and the neighboring cell according to the initial information includes:

obtaining a second handover quantity of handovers from the serving cell to the neighboring cell when the initial information is used to indicate the information about a handover between the serving cell and the neighboring cell; and

if the second handover quantity is greater than a second preset threshold, obtaining the evaluation indicator of interference between the serving cell and the neighboring cell according to a preset second increasing function and the second handover quantity.

Optionally, the obtaining an evaluation indicator of interference between the serving cell and the neighboring cell according to the initial information includes:

when the initial information is used to indicate the information about interference between the serving cell and the neighboring cell, obtaining the evaluation indicator of interference between the serving cell and the neighboring cell according to uplink reference signal received power RSRP of signals sent by multiple UEs in the serving cell to the neighboring cell, where the multiple UEs include the first UE; and
obtaining uplink RSRP of a signal sent by the first UE in the serving cell to the neighboring cell includes:

obtaining a first signal difference according to downlink RSRP reported by the first UE, where the first signal difference is a signal difference between downlink RSRP of the serving cell and downlink RSRP of the neighboring cell, and the downlink RSRP reported by the first UE includes downlink RSRP of a signal sent by the serving cell to the first UE and downlink RSRP of a signal sent by the neighboring cell to the first UE; and
obtaining, according to the first signal difference and uplink RSRP of a signal sent by the first UE to the serving cell, the uplink RSRP of the signal sent by the first UE to the neighboring cell.

Optionally, the obtaining an evaluation indicator of interference between the serving cell and the neighboring cell according to the initial information includes:

when the initial information is used to indicate the information about interference between the serving cell and the neighboring cell, obtaining the evaluation indicator of interference between the serving cell and the neighboring cell according to uplink reference signal received power RSRP of signals sent by multiple UEs in the neighboring cell to the serving cell, where the multiple UEs include second UE; and
obtaining uplink RSRP of a signal sent by the second UE in the neighboring cell to the serving cell includes:

obtaining a second signal difference according to downlink RSRP reported by the second UE, where the second signal difference is a signal difference between downlink RSRP of the neighboring cell and downlink RSRP of the serving cell, and the downlink RSRP reported by the second UE includes downlink RSRP of a signal sent by the neighboring cell to the second UE and downlink RSRP of a signal sent by the serving cell to the second UE; and
obtaining, according to the second signal difference and uplink RSRP of a signal sent by the second UE to the neighboring cell, the uplink RSRP of the signal sent by the second UE to the serving cell.

Optionally, the clustering the serving cell and the neighboring cell according to the interference evaluation indicator includes:

grouping a neighboring cell whose interference evaluation indicator is greater than a third preset threshold and the serving cell into a same cluster.

Optionally, before the clustering the serving cell and the neighboring cell according to the interference evaluation indicator, the operation further includes:

when a delay between the first UE and the neighboring cell is less than a fourth preset threshold, executing the operation of clustering the serving cell and the neighboring cell according to the interference evaluation indicator.

The base station in this embodiment may be configured to perform the technical solution of the cell clustering method provided in any embodiment of the present invention, and implementation principles and technical effects thereof are similar and are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A cell clustering method, comprising:

   Obtaining initial information, wherein the initial information is used to indicate information about a handover between a serving cell and a neighboring cell or information about interference between a serving cell and a neighboring cell, the neighboring cell is a cell adjacent to the serving cell, and the serving cell is a cell in which first user equipment (UE) is located;
   Obtaining an evaluation indicator of interference between the serving cell and the neighboring cell according to the initial information; and
   Clustering the serving cell and the neighboring cell according to the interference evaluation indicator.

2. The method according to claim 1, wherein the obtaining an evaluation indicator of interference between the serving cell and the neighboring cell according to the initial information comprises:

   obtaining a first handover quantity of handovers from the neighboring cell to the serving cell when the initial information is used to indicate the information about a handover between the serving cell and the neighboring cell; and
   if the first handover quantity is greater than a first preset threshold, obtaining the evaluation indicator of interference between the serving cell and the neighboring cell according to a preset first increasing function and the first handover quantity.

3. The method according to claim 1, wherein the obtaining an evaluation indicator of interference between the serving cell and the neighboring cell according to the initial information comprises:

   obtaining a second handover quantity of handovers from the serving cell to the neighboring cell when the initial information is used to indicate the information about a handover between the serving cell and the neighboring cell; and
   if the second handover quantity is greater than a second preset threshold, obtaining the evaluation indicator of interference between the serving cell and the neighboring cell according to a preset second increasing function and the second handover quantity.

4. The method according to claim 1, wherein the obtaining an evaluation indicator of interference between the serving cell and the neighboring cell according to the initial information comprises:

   when the initial information is used to indicate the information about interference between the serving cell and the neighboring cell, obtaining the evaluation indicator of interference between the serving cell and the neighboring cell according to uplink reference signal received power (RSRP) of signals sent by multiple UEs in the serving cell to the neighboring cell, wherein the multiple UEs comprise the first UE; and
   obtaining uplink RSRP of a signal sent by the first UE in the serving cell to the neighboring cell comprises:

     obtaining a first signal difference according to downlink RSRP reported by the first UE, wherein the first signal difference is a signal difference between downlink RSRP of the serving cell and downlink RSRP of the neighboring cell, and the downlink RSRP reported by the first UE comprises downlink RSRP of a signal sent by the serving cell to the first UE and downlink RSRP of a signal sent by the neighboring cell to the first UE; and
     obtaining, according to the first signal difference and uplink RSRP of a signal sent by the first UE to the serving cell, the uplink RSRP of the signal sent by the first UE to the neighboring cell.

5. The method according to claim 1, wherein the obtaining an evaluation indicator of interference between the serving cell and the neighboring cell according to the initial information comprises:

when the initial information is used to indicate the information about interference between the serving cell and the neighboring cell, obtaining the evaluation indicator of interference between the serving cell and the neighboring cell according to uplink reference signal received power RSRP of signals sent by multiple UEs in the neighboring cell to the serving cell, wherein the multiple UEs comprise second UE; and

obtaining uplink RSRP of a signal sent by the second UE in the neighboring cell to the serving cell comprises:

> obtaining a second signal difference according to downlink RSRP reported by the second UE, wherein the second signal difference is a signal difference between downlink RSRP of the neighboring cell and downlink RSRP of the serving cell, and the downlink RSRP reported by the second UE comprises downlink RSRP of a signal sent by the neighboring cell to the second UE and downlink RSRP of a signal sent by the serving cell to the second UE; and
>
> obtaining, according to the second signal difference and uplink RSRP of a signal sent by the second UE to the neighboring cell, the uplink RSRP of the signal sent by the second UE to the serving cell.

6. The method according to any one of claims 1 to 5, wherein the clustering the serving cell and the neighboring cell according to the interference evaluation indicator comprises:

> Grouping a neighboring cell whose interference evaluation indicator is greater than a third preset threshold and the serving cell into a same cluster.

7. The method according to any one of claims 1 to 6, wherein before the clustering the serving cell and the neighboring cell according to the interference evaluation indicator, the method further comprises:

> when a delay between the first UE and the neighboring cell is less than a fourth preset threshold, executing the operation of clustering the serving cell and the neighboring cell according to the interference evaluation indicator.

8. Abase station, comprising:

> a first obtaining module, configured to obtain initial information, wherein the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located;
>
> a second obtaining module, configured to obtain an evaluation indicator of interference between the serving cell and the neighboring cell according to the initial information; and
>
> a clustering module, configured to cluster the serving cell and the neighboring cell according to the interference evaluation indicator.

9. The base station according to claim 8, wherein the second obtaining module comprises:

> a first handover quantity obtaining submodule, configured to obtain a first handover quantity of handovers from the neighboring cell to the serving cell when the initial information is used to indicate the information about a handover between the serving cell and the neighboring cell; and
>
> a first processing submodule, configured to: if the first handover quantity is greater than a first preset threshold, obtain the evaluation indicator of interference between the serving cell and the neighboring cell according to a preset first increasing function and the first handover quantity.

10. The base station according to claim 8, wherein the second obtaining module comprises:

> a second handover quantity obtaining submodule, configured to obtain a second handover quantity of handovers from the serving cell to the neighboring cell when the initial information is used to indicate the information about a handover between the serving cell and the neighboring cell; and
>
> a second processing submodule, configured to: if the second handover quantity is greater than a second preset threshold, obtain the evaluation indicator of interference between the serving cell and the neighboring cell according to a preset second increasing function and the second handover quantity.

11. The base station according to claim 8, wherein the second obtaining module comprises:

> a third processing submodule, configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the serving cell to the neighboring cell, wherein the multiple UEs comprise the first UE; wherein

the third processing submodule is specifically configured to:

obtain a first signal difference according to downlink RSRP reported by the first UE, wherein the first signal difference is a signal difference between downlink RSRP of the serving cell and downlink RSRP of the neighboring cell, and the downlink RSRP reported by the first UE comprises downlink RSRP of a signal sent by the serving cell to the first UE and downlink RSRP of a signal sent by the neighboring cell to the first UE; and

obtain, according to the first signal difference and uplink RSRP of a signal sent by the first UE to the serving cell, uplink RSRP of a signal sent by the first UE to the neighboring cell.

12. The base station according to claim 8, wherein the second obtaining module comprises:

a fourth processing submodule, configured to: when the initial information is used to indicate the information about interference between the serving cell and the neighboring cell, obtain the evaluation indicator of interference between the serving cell and the neighboring cell according to uplink reference signal received power RSRP of signals sent by multiple UEs in the neighboring cell to the serving cell, wherein the multiple UEs comprise second UE; wherein

the fourth processing submodule is specifically configured to:

obtain a second signal difference according to downlink RSRP reported by the second UE, wherein the second signal difference is a signal difference between downlink RSRP of the neighboring cell and downlink RSRP of the serving cell, and the downlink RSRP reported by the second UE comprises downlink RSRP of a signal sent by the neighboring cell to the second UE and downlink RSRP of a signal sent by the serving cell to the second UE; and

obtain, according to the second signal difference and uplink RSRP of a signal sent by the second UE to the neighboring cell, uplink RSRP of a signal sent by the second UE to the serving cell.

13. The base station according to any one of claims 8 to 12, wherein the clustering module is specifically configured to:

group a neighboring cell whose interference evaluation indicator is greater than a third preset threshold and the serving cell into a same cluster.

14. The base station according to any one of claims 8 to 13, further comprising:

a delay determining module, configured to: when a delay between the first UE and the neighboring cell is less than a fourth preset threshold, execute the operation of clustering the serving cell and the neighboring cell according to the interference evaluation indicator.

Obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located ⟶ 101

Obtain an evaluation indicator of interference between the serving cell and the neighboring cell according to the initial information ⟶ 102

Cluster the serving cell and the neighboring cell according to the interference evaluation indicator ⟶ 103

FIG. 1

Obtain initial information, where the initial information is used to indicate information about a handover between a serving cell and a neighboring cell or information about interference between a serving cell and a neighboring cell, the neighboring cell is a cell adjacent to the serving cell, and the serving cell is a cell in which first user equipment UE is located ⟶ 201

Obtain an evaluation indicator of interference between the serving cell and the neighboring cell according to the initial information ⟶ 202

Group a neighboring cell whose interference evaluation indicator is greater than a third preset threshold and the serving cell into a same cluster ⟶ 203

FIG. 2

Cell 1

Cell 4

Cell 2

Cell 7

Cell 5

Cell 3

Cell 8

Cell 6

FIG. 3

| First obtaining module | Second obtaining module | Clustering module |
|---|---|---|

401

402

403

FIG. 4

FIG. 5

1003

100

Base station

1001

Receiver

Processor

1002

Memory

FIG. 6

# INTERNATIONAL SEARCH REPORT

| International application No. |
|---|
| **PCT/CN2015/082065** |

**A. CLASSIFICATION OF SUBJECT MATTER**

H04W 16/18 (2009.01) i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNABS; CNKI; VEN: physical adjacent, delay, adjacent cell, cell cluster, frequency, cluster, adjacent, cell, switch, interference

**C. DOCUMENTS CONSIDERED TO BE RELEVANT**

| Category* | Citation of document, with indication, where appropriate, of the relevant passages | Relevant to claim No. |
|---|---|---|
| X | CN 103997738 A (DATANG MOBILE COMMUNICATIONS EQUIPMENT CO., LTD.), 20 August 2014 (20.08.2014), description, paragraphs 0080-0082 | 1, 6, 8, 13 |
| Y | CN 103997738 A (DATANG MOBILE COMMUNICATIONS EQUIPMENT CO., LTD.), 20 August 2014 (20.08.2014), description, paragraphs 0080-0082 | 7, 14 |
| Y | CN 103200573 A (DONGGUAN YULONG COMMUNICATION TECHNOLOGY CO., LTD. et al.), 10 July 2013 (10.07.2013), description, paragraph 0036 | 7, 14 |
| A | CN 103338517 A (BEIJING UNIVERSITY OF POSTS AND TELECOMMUNICATIONS), 02 October 2013 (02.10.2013), the whole document | 1-14 |
| A | CN 103415058 A (XIDIAN UNIVERSITY), 27 November 2013 (27.11.2013), the whole document | 1-14 |
| A | CN 101778395 A (HUAWEI TECHNOLOGIES CO., LTD.), 14 July 2010 (14.07.2010), the whole document | 1-14 |
| A | CN 101621834 A (BEIJING UNIVERSITY OF AERONAUTICS AND ASTRONAUTICS), 06 January 2010 (06.01.2010), the whole document | 1-14 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 September 2015 (12.09.2015) | **10 October 2015 (10.10.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **QU, Zhen** Telephone No.: (86-10) **62089137** |
|---|---|

Form PCT/ISA/210 (second sheet) (July 2009)

**INTERNATIONAL SEARCH REPORT**

International application No.

**PCT/CN2015/082065**

C (Continuation).     DOCUMENTS CONSIDERED TO BE RELEVANT

| Category* | Citation of document, with indication, where appropriate, of the relevant passages | Relevant to claim No. |
|---|---|---|
| A | CN 102057591 A (TELEFON AB L.M. ERICSSON), 11 May 2011 (11.05.2011), the whole document | 1-14 |

Form PCT/ISA/210 (continuation of second sheet) (July 2009)

## INTERNATIONAL SEARCH REPORT
Information on patent family members

International application No.

**PCT/CN2015/082065**

| Patent Documents referred in the Report | Publication Date | Patent Family | Publication Date |
|---|---|---|---|
| CN 103997738 A | 20 August 2014 | None | |
| CN 103200573 A | 10 July 2013 | None | |
| CN 103338517 A | 02 October 2013 | None | |
| CN 103415058 A | 27 November 2013 | None | |
| CN 101778395 A | 14 July 2010 | CN 101778395 B | 23 May 2012 |
| CN 101621834 A | 06 January 2010 | CN 101621834 B | 09 November 2011 |
| CN 102057591 A | 11 May 2011 | EP 2283598 A1 | 16 February 2011 |
| | | RU 2504083 C2 | 10 January 2014 |
| | | CN 102057591 B | 19 March 2014 |
| | | US 2011076999 A1 | 31 March 2011 |
| | | US 8543129 B2 | 24 September 2013 |
| | | US 8121590 B2 | 21 February 2012 |
| | | US 2012147856 A1 | 14 June 2012 |
| | | WO 2009148381 A1 | 10 December 2009 |
| | | RU 2010154303 A | 20 July 2012 |
| | | IN 201006763 P4 | 01 July 2011 |

Form PCT/ISA/210 (patent family annex) (July 2009)